# EUROPÄISCHE PATENTSCHRIFT

(11) **EP 2 992 312 B1**
(45) Veröffentlichungstag und Bekanntmachung des Hinweises auf die Patenterteilung: **14.06.2017**
(21) Anmeldenummer: 14722553.6
(22) Anmeldetag: 26.04.2014
(51) Int. Cl.: G01N 17/04

(54) **VORRICHTUNG UND VERFAHREN ZUR MESSUNG DER VERÄNDERUNG VON WERKSTOFFEN DURCH GASSTRÖME**
DEVICE AND METHOD FOR MEASURING CHANGES IN MATERIALS CAUSED BY GAS STREAMS
DISPOSITIF ET PROCÉDÉ DE MESURE DE LA VARIATION DE MATIÈRES PAR DES FLUX DE GAZ

(30) Priorität: 03.05.2013 DE 102013007529
(43) Veröffentlichungstag der Anmeldung: 09.03.2016
(73) Patentinhaber: Chemin GmbH, 86167 Augsburg (DE)
(72) Erfinder: SPIEGEL, Wolfgang, 86415 Mering (DE); HERZOG, Thomas, 86163 Augsburg (DE); MAGEL, Gabriele, 86157 Augsburg (DE); MÜLLER, Wolfgang, 86570 Inchenhofen (DE); SCHMIDL, Werner, 80639 München (DE); ALE IO, Hans-Peter, 51067 Köln (DE)
(74) Vertreter: Flaccus, Rolf-Dieter
(86) Internationale Anmeldenummer: PCT/EP2014/001123
(87) Internationale Veröffentlichungsnummer: WO 2014/177262

(56) Entgegenhaltungen:
- WO-A2-2006/124772
- SU-A- 327 399

## Beschreibung

Die Erfindung betrifft eine Vorrichtung und ein Verfahren zur Messung der Veränderung von Werkstoffen durch Gasströme, insbesondere zur Ermittlung der betrieblichen Auswirkungen auf metallische und nichtmetallische Werkstoffe im Einsatz in Verbrennungskammern, wobei diese Auswirkungen insbesondere Korrosion, Erosion, Erosionskorrosion und Gefügeveränderungen betreffen, die im Kontakt mit Gasströmen aus Verbrennungsprozessen entstehen.

Die aktuellen Interessen von Verbrennungsanlagen gehen insbesondere im Zeichen der sogenannten Energiewende zu immer höheren Wirkungsgraden von Dampferzeugern, d.h. möglichst viel Verstromungsanteil pro eingesetztem Brennstoff zu erreichen. Diese Ziele dienen auch dem Klimaschutz. Zur Steigerung des Wirkungsgrades sind höhere Temperaturen des Wärmetauschermediums und die Senkung der Speisewassertemperatur (Economizer) relevante Wege. Deshalb ist es zunehmend von Interesse, die größtmögliche Dampftemperatur (Verdampfer und Überhitzer), welche unter den gegebenen Randbedingungen (Brennstoff, Verfahrenstechnik und Werkstoffe) sinnvoll ist, ermitteln zu können. Gleiches gilt für die niedrigste Speisewassertemperatur. Diese betriebswirtschaftlich sinnvolle, größtmögliche Temperatur an Verdampfer und Überhitzer sowie kleinstmögliche Temperatur an Economizern (nachfolgend als "optimale Mediumstemperatur" bezeichnet) ist im Ergebnis ein komplexes Zusammenwirken der oben genannten Randbedingungen und damit nicht allgemein gültig ableitbar oder vorhersehbar. Modellierungen oder Simulationen führen zu keinen praxistauglichen Ergebnissen.

Vielmehr ist diese optimale Mediumstemperatur für jeden Dampferzeuger auch abhängig vom Brennstoff und der Feuerung individuell gegeben und kann in der Praxis vielfach nur auf empirischem Wege mittels Sonden in den Dampferzeugern ermittelt werden.

Bei der Verbrennung von Brennstoffen in einer Verbrennungskammer entstehen überwiegend gasförmige Produkte. Es werden aber auch flüssige und feste Stoffe gebildet (u.a. Teere, Ruß oder Salze). Des Weiteren werden unverbrannte, teilverbrannte und auch nicht brennbare Stoffe in Form von Partikeln (Staub, Aschen) oder Gasen (z.B. Salze) freigesetzt. Diese Stoffe werden aus dem Verbrennungsbereich in nachfolgende Prozessschritte als Teil des Gasstromes getragen und können dort untereinander und mit den Werkstoffen von Bauteilen und Verbrauchsmitteln weiter reagieren.
Beispielsweise können diese unerwünschten Reaktionen bei der Wärmeauskopplung an Verdampfer- und Überhitzerrohren, an Blechen zur Abdichtung der Kessel auftreten oder diese Stoffe mit Additiven oder bei einer SNCR-Eindüsung unerwünschte Reaktionen auslösen.

Der Begriff 'Gasstrom' ist dabei im Sinne dieser Erfindung als Verbrennungsgasstrom anzusehen, wobei dieser Begriff weitestmöglich auszulegen ist. Er betrifft strömende Gase, die eine Temperatur aufweisen, die zu den oben genannten Auswirkungen führen können. In der Regel liegt diese Temperatur über 100 °C, meist sogar weit darüber. Es sind jedoch auch Temperaturen unter 100 °C möglich. Des Weiteren umfasst der Gasstrom in der Regel mindestens zwei gasförmige Komponenten (z.B. CO₂ und H₂O) und/oder zusätzlich flüssige und/oder feste Bestandteile. Die Erzeugung der Gase ist dabei unerheblich und muss nicht zwingend durch eine Verbrennung hervorgerufen werden. Dennoch stellen Verbrennungsgase die größte Gasstromgruppe für die Anwendung dieser Erfindung dar.

Die staubförmigen, flüssigen und gasförmigen Komponenten in einem durch eine Anlage führenden Gasstrom treten mit Teilen dieser Anlage in Berührung, welche meist aus keramischen und metallischen Werkstoffen gefertigt sind. Solche Teile sind z.B. Wärmeübertragungsflächen eines Dampferzeugers oder Bleche in der Rauchgasreinigung. In der Regel geschieht dieser Kontakt durch ein Entlangströmen oder durch Ablagerung von Stoffen (Belagsbildung) auf der Werkstoffoberfläche.

In den meisten Fällen findet eine chemische Wechselwirkung zwischen dem Gasstrom und dem Werkstoff oder dem Belag statt. In günstigen Fällen bildet sich bei metallischen Werkstoffen eine Zwischenschicht aus Reaktionsprodukten (Metalloxide, in der Kraftwerkstechnik meist als "Zunderschicht" bezeichnet), die eine fortschreitende Wechselwirkung zwischen Belag und Werkstoff behindert und evtl. unterbindet (Passivierung). Der Verbrauch an metallischem Werkstoff ist dabei so gering, dass ein einmaliger Passivierungsvorgang die geometrischen Merkmale des Werkstoffes kaum verändert. In ungünstigen Fällen entsteht entweder keine stabile Passivierungsschicht oder die Passivierungsschicht wird durch andere Einflüsse gestört oder zerstört, z.B. durch Korrosion und Erosionskorrosion.

Bei Wärmeübertragungsflächen liegen in der Regel Werkstofftemperaturen vor, bei denen die Korrosion als Hochtemperaturkorrosion, welche in der Regel durch Reaktion gasförmiger Inhaltsstoffe aus dem Gasstrom oder von Gasen aus dem Belag mit dem Werkstoff bewirkt wird, oder als Salzschmelzenkorrosion, welche in der Regel durch Reaktionen von Verbindungen mit niedrigem Schmelzpunkt (Eutektika) und dem Werkstoff bewirkt wird, einzustufen ist.

Im Bereich von ca. <200°C kann die Korrosion auch elektrolytisch in Form von wässrigen Medien erfolgen (Taupunkt- und Deliqueszenzkorrosion).

Erosionskorrosion kann u.a. durch einen mechanischen Einfluss geschehen, z.B. bei Reinigungsvorgängen während des Betriebs der Anlage, durch ungünstige Strömungsverhältnisse oder auch durch thermischen Einfluss. Auch ist es möglich, dass die gebildeten Passivierungsschichten von gasförmigen Molekülen (z.B. Chlor) oder diffundierenden Atomen (z.B. Schwefel) durchdrungen werden, sodass die passivierende Schicht gegenüber den thermochemischen Prozessen wirkungslos ist. Ebenso können die Metalloxide der passivierenden Schichten von Alkalien (z.B. Natrium oder Kalium) und Schwermetallen (z.B. Zink oder Blei) reduziert und damit zerstört werden.

In diesen ungünstigen Fällen können die chemischen Wechselwirkungen bzw. eine Abfolge von chemisch, mechanisch oder thermisch induzierten Wechselwirkungen zu einer schadensverursachenden Abzehrung der Werkstoffe führen. So kann z.B. die Wanddicke eines Kesselrohres soweit reduziert werden, dass die Festigkeitsgrenze des restlichen Rohrwerkstoffes überschritten wird und ein sogenannter Rohrreißer entsteht. Diese Vorgänge wirken sich in den meisten Fällen sehr nachteilig auf das Nutzungsverhalten der Anlage aus. Zudem können Schädigungen einzelner Komponenten auch eine Zerstörung der kompletten Anlage bewirken und damit hohe Reparaturkosten auslösen bis hin zur Gefährdung von Menschenleben.

Dem Vermeiden von Korrosionsprozessen in Verbrennungsanlagen kommt damit allgemein hohe Bedeutung zu. Dies manifestiert sich auch in zahlreichen Normen und Vorgaben für den Bau und Betrieb von Verbrennungsanlagen und in der verpflichtenden, periodischen Überwachung durch autorisierte Stellen.

Dass es dennoch immer wieder zu unerwarteten, korrosionsbedingten Ausfällen von Verbrennungsanlagen kommt, liegt daran, dass die Bauteile aus metallischen Werkstoffen während des Betriebs der Anlage nicht so überwacht werden können, dass sich ein Korrosionsvorgang in Bezug auf den Ort und die Intensität rechtzeitig erkennen lässt. Je länger die geplante Reisezeit (ununterbrochener Betriebszeitraum) der Anlage ist, umso bedeutsamer ist es, die möglichen Korrosionsprozesse bzw.

Erosionskorrosionsprozesse nicht nur in den periodisch stattfindenden, aber zeitlich kurzen Stillständen inspizieren zu können, sondern bereits während des laufenden Betriebs sichtbar zu machen. In diesem Fall können durch geeignete Auswahl der Werkstoffe, der Verfahrenstechnik oder durch eine geeignete Selektion bei den Brennstoffen zeitnahe und am realen Betrieb orientierte Optimierungen durchgeführt werden.

Aus diesem Grund besteht ein großes Interesse, durch eine möglichst gute Kenntnis der zu erwartenden Korrosionsvorgänge an Werkstoffen in Anlagen unter den gegebenen betrieblichen Einflussgrößen zu einer Prognosefähigkeit und zu einer vorausschauenden Instandhaltung mit optimaler Werkstoffnutzung zu gelangen. Zu diesem Zweck wird in der Literatur eine Vielzahl von Tests unter Laborbedingungen beschrieben, die das Verhalten metallischer Werkstoffe unter vorgegebenen, bzw. gezielt variierten Bedingungen beschreiben. Viele dieser Tests werden unter voreingestellter, konstanter Temperatur und einer vorgegebenen chemischen Zusammensetzung des aufliegenden Belags durchgeführt. Das Ergebnis dieser Tests sind u.a. Abzehrraten (Verlust an metallischem Werkstoff pro Zeit) sowie Kenntnisse über die unter den gewählten Bedingungen ablaufenden Prozesse und Reaktionsprodukte.

Es hat sich herausgestellt, dass die Ergebnisse dieser Labortests mit Befunden aus der Praxis oft nicht ausreichend übereinstimmen oder widersprüchlich sind.

Auch die Erfahrungen mit baugleichen Anlagen an verschiedenen Standorten oder mit denselben Schutzmaßnahmen in baugleichen Anlagen oder Anlagen mit den gleichen Betriebsparametern können sich widersprechen, sodass auch eine solche Möglichkeit der Prognose mit Nachteilen behaftet ist.

Eine weitere Möglichkeit ist der Einsatz von Sonden, die temporär oder dauerhaft in einen Gasstrom eingebracht werden. Ein geeignet dimensionierter metallischer Anteil im Sondenkörper (Prüfkörper) simuliert dabei eine Komponente der Bauteile, beispielsweise einen Rohrwerkstoff, eine Schutzschicht oder einen Blechwerkstoff. Eine gewisse Übereinstimmung zu den realen Prozessen in der Anlage wird dadurch erreicht, dass sich die Sonde im realen Abgas befindet, also die gleichen Temperatur- und Belagsbildungsbedingungen und möglicherweise auch die gleichen Anströmungsbedingungen miterlebt wie die entsprechenden Bauteile in dem Bereich der Anlage, in den die Sonde eingeführt wird.
Nachteil dieser Sonden ist, dass immer noch relevante Randbedingungen von Korrosionsprozessen nicht berücksichtigt werden, da bei diesen Sonden der Temperaturgradient zwischen Gasstrom und Werkstoff, d.h. der Wärmestrom im dazwischenliegenden Belag und in den Passivierungsschichten, nicht berücksichtigt wird.

Diesbezügliche Weiterentwicklungen der Sonden lassen sich durch eine aktive Kühlung der Sonde erreichen, z.B. indem Fluidleitungen in der Sonde ein Kühlmedium zum Prüfkörper leiten und eine wählbare Temperatur des metallischen Werkstoffs vorgeben (sog. Korrosionssonden). Damit können auch die Werkstoffoberflächentemperaturen, die für unterschiedliche Bauteile gegeben sind, mitberücksichtigt werden sowie die Auswirkung der Wärmestromdichte auf die Korrosion. Mit derartigen Sonden lassen sich realitätsnahe Befunde zu den Korrosionsprozessen bei einer bestimmten Temperatur in einer Verbrennungsanlage ableiten.

Das Korrosionsverhalten der Werkstoffe ist in hohem Maße abhängig von
a) der Oberflächentemperatur der Werkstoffe,
b) der chemischen und mineralogischen Zusammensetzung der Beläge (den Phasen und ihren individuellen thermodynamischen Eigenschaften) und des darin gebundenen Gasmikromilieus und
c) von der Wärmestromdichte.
Diese Einflussgrößen am Korrosionsort werden durch Randbedingungen wie Art des Brennstoffes, der Verfahrenstechnik oder den verwendeten Werkstoffen vorgegeben.

Die optimale Mediumstemperatur für einen spezifischen Werkstoffzustand (bei Metallen z.B. Legierung, Gefüge, Morphologie) beschreibt die Eigenschaft, dass eine ausreichende Resistenz dieses Werkstoffs während einer vorgegebenen Betriebsperiode (Reisezeit) gegeben ist.
Die optimale Mediumstemperatur eines gewählten Werkstoffs, insbesondere der betreffenden Werkstoffoberfläche, ergibt sich somit aus dem sehr komplexen Wechselspiel zwischen den Einflussgrößen der chemisch-mineralogischen Zusammensetzung der Beläge und des Gasmikromilieus im Belag sowie der Wärmestromdichte.

Damit ergibt sich eine große Parametervielfalt, wenn mittels Sonden die optimale Mediumstemperatur ermittelt werden soll. Die bisher verfügbaren Sonden, die für Werkstofftests eingesetzt werden, können pro Einsatz nur jeweils einen engen Temperaturbereich von wenigen Kelvin abbilden. Zum Austesten der optimalen Mediumstemperatur ergibt sich damit eine sehr umfangreiche Abfolge von Sonden mit jeweils variierter Werkstofftemperatur. Üblicherweise verbleibt eine Sonde einige Tage, Wochen oder Monate im Dampferzeuger, bis sich verwertbare Korrosionsphänomene entwickelt haben. Zudem sind längere Verweilzeiten der Sonde auch dann zu bevorzugen, wenn die Heterogenität des Brennstoffs bzw. der Feuerung deutlich schwankende Betriebszustände bedingt.

SU 327 399 A beschreibt eine Sonde zur Messung der Korrosionsgeschwindigeit von Metall umfassend einen mit Temperatursensoren ausgestatteten rohrförmigen Sondenkörper.

WO 2006/124772 A2 offenbart ein Korrosionsschutzverfahren, insbesondere zur Kontrolle der Chloridkorrosion in Kesseln. Dabei wird sonvohl die Korrosion von Hochtemperaturoberflächen gemessen als auch Möglichkeiten zur Einbringung von Behandlungschemikalien durch gezielte Injektion erläutert.

Aufgabe der vorliegenden Erfindung war es, die Nachteile des Standes der Technik zu überwinden und insbesondere diesen Aufwand zu reduzieren.

Diese Aufgabe wird durch eine Vorrichtung und ein Verfahren gemäß den Ansprüchen gelöst.

Die erfindungsgemäße Vorrichtung betrifft eine Werkstoffsonde, die es erlaubt, den realen zu untersuchenden Werkstoff als Sondenoberfläche in einem frei wählbaren, großen Temperaturbereich (mehrere zehn bis mehrere hundert Kelvin) zu kühlen/ heizen und das entstehende Intervall von Temperaturgradienten über die Messzeit konstant zu halten. Jedem Temperaturgradienten im gewählten Temperaturbereich ist ein spezifischer Ort auf der Sonde zugeordnet. Wechselwirkungen zwischen Rauchgas, Belag und Werkstoff im gesamten relevanten Temperaturbereich werden somit auf die Sondenlänge abgebildet.
Damit entfällt, dass für jede Temperatur ein eigener Test notwendig ist. Es entfällt auch, dass der Sondenkörper sukzessive mehrere Temperaturpositionen durchlaufen muss, und sich damit unterschiedliche Bedingungen auf den gleichen Werkstoff abbilden, was die Auswertung im Labor in Bezug auf die Korrosionsursache und den Korrosionsmechanismus verhindern würde.

Der Sondenkörper der erfindungsgemäßen Werkstoffsonde umfasst im Messbereich mindestens einen lang gestreckten Hohlkörper und mindestens einen Flächenbereich des zu untersuchenden Werkstoffs auf der Außenseite der Sonde.
Die Werkstoffsonde umfasst des Weiteren im Innern des Sondenkörpers, insbesondere im Inneren mindestens eines der Hohlkörper, Fluidleitungen, mittels denen die Sonde, insbesondere der betreffende Hohlkörper, durch ein Fluid gekühlt oder beheizt werden kann.
Zur Messung und Regelung einzelner Temperaturgradienten und/oder des Bereichs von Temperaturgradienten umfasst die Werkstoffsonde zusätzlich mindestens zwei Temperatursensoren, die zur Messung und Regelung zumindest der geringsten und höchsten Temperatur des Messbereichs der Werkstoffsonde und der Temperaturverteilung über den Messbereich dienen, und die auf der Innenseite der Oberfläche des Sondenkörpers aufgebracht sind.

Bevorzugte Hohlkörper sind Rohre. Aus Gründen der Übersicht wird der Begriff 'Rohr' im Folgenden synonym für Hohlkörper verwendet. Der Querschnitt des Hohlkörpers ist dabei beliebig. Bevorzugt sind runde oder mehreckige Querschnitte, wobei im letzten Fall die Ecken abgerundet sein können. Des Weiteren ist bevorzugt, dass der Querschnitt so gestaltet ist, dass er dem zu untersuchenden Werkstück entspricht.
Bevorzugte Hohlkörper bestehen aus Metall oder enthalten Metall, insbesondere Eisen oder auf Eisen basierende Metalllegierungen, z.B. Stahl.

Bevorzugt ist ein Flächenbereich des zu untersuchenden Werkstoffs auf der Sondenoberfläche oder zumindest der Oberfläche mindestens eines der Hohlkörper aufgebracht, insbesondere durch Beschichtungsprozesse, oder wird durch die Sondenoberfläche oder die Oberfläche des betreffenden Hohlkörpers gebildet.
In einer bevorzugten Ausführungsform sind mindestens zwei unterschiedliche Werkstoffe in Form zweier oder mehrerer unterschiedlicher Flächenbereiche auf dem Sondenkörper (bzw. mindestens einem der Hohlkörper) aufgebracht. Dies kann beispielsweise dadurch realisiert werden, dass unterschiedliche Hohlkörper des Sondenkörpers unterschiedliche Materialien auf ihrer Oberfläche aufweisen oder mindestens einer der Hohlkörper unterschiedliche Materialien auf seiner Oberfläche aufweist. Auch ist eine mehrlagige oder mehrschichtige Anordnung von Werkstoffen auf mindestens einer der vorgenannten Oberflächen möglich.

Die Fluidleitungen sind vorzugsweise so konstruiert, dass die Strömung des Fluids auf dem Sondenkörper, zumindest im Messbereich, einen Temperaturgradienten einstellt, der durch eine Regelung der Fluidmenge und der Fluidtemperatur vorgegeben und konstant gehalten wird.
Die stetige Regelung ist erforderlich, da sich durch die Belagsbildung, durch die Korrosionsprozesse, durch die Produkte von Korrosionsprozessen und durch Schwankungen der Abgastemperatur und -geschwindigkeit ändernde Wärmestromdichten ergeben.
Sowohl die Ausgestaltung der Fluidleitungen, z.B. indem mehrere Leitungen und/oder pro Leitung mehrere Ein- und/oder Austrittsöffnungen verwendet werden, als auch die Fluidtemperatur und Fluidmenge bestimmen den Temperaturverlauf (das Temperaturprofil) entlang des Sondenkörpers. Hierbei ist es von Vorteil, wenn die Temperaturen in dem gewählten Temperaturbereich möglichst gleichmäßig über den Sondenkörper verlaufen, wie z.B. eine konstante, quadratische oder logarithmische Temperaturabnahme.

In einer bevorzugten Ausführungsform sind mindestens zwei Fluidleitungen mit unterschiedlicher Eintauchtiefe im Rohr installiert. Eine solche Anordnung hat den Vorteil, dass die Regelbarkeit der (insbesondere höchsten) Temperatur verbessert wird.

In einer bevorzugten Ausführungsform führt mindestens eine der Fluidleitungen an einer Stirnseite des Sondenkörpers in diesen hinein, führt durch die Länge des Messbereichs des Sondenkörpers durch diesen hindurch, so dass das Fluid am Ende der Fluidleitung austritt und in Wärmekontakt zum Sondenkörper an diesem entlang fließt, insbesondere in Richtung Fluideinlass.

In einer bevorzugten Ausführungsform führt mindestens eine der Fluidleitungen an einer Stirnseite des Sondenkörpers in diesen hinein, führt in Wärmekontakt mit einem Teil des Sondenkörpers durch die Länge des Sondenkörpers hindurch, tritt an der gegenüberliegenden Stirnseite aus dem Messbereich des Sondenkörpers aus, wird um 180° umgelenkt und verläuft in entgegengesetzter Richtung in Wärmekontakt mit dem zuführenden Teil der Leitung und/oder dem selben Teil des Sondenkörpers erneut durch die gesamte Länge des Sondenkörpers. Bevorzugt besteht in dem Bereich der 180°-Umlenkung ein sehr guter Temperaturkontakt zum Gasstrom, sodass der Fluidstrom dadurch aufgeheizt werden kann, insbesondere auf mehr als 70 %, vorzugsweise mehr als 90 % der Temperatur des Gasstroms. Auf diese Weise ist es möglich, die Temperatur des Gasstroms optimal zu nutzen, um der Werkstoffsonde über ihren Messbereich einen großen Temperaturbereich aufzuprägen.

Bevorzugt sind die Temperatursensoren an der Oberfläche des Sondenkörpers, insbesondere auf der Innenseite der Oberfläche des Sondenkörpers, aufgebracht. Dabei bedeutet 'Innenseite der Oberfläche', dass sich zwischen Gasstrom und Temperatursensor mindestens der Flächenbereich des Werkstoffs befinden sollte und/oder die Wandung mindestens eines der Hohlkörper.
Bevorzugte Temperatursensoren sind Thermoelemente, insbesondere punktgeschweißte Thermoelemente, die vorzugsweise mit einer metallischen Oberfläche des Sondenkörpers oder eines seiner Hohlkörper verbunden sind. Vorzugsweise sind mindestens zwei der Temperatursensoren über eine metallische Oberfläche miteinander elektrisch leitend verbunden und enthalten insbesondere ein Metall, welches sich von dieser Oberfläche des Sondenkörpers unterscheidet, oder bestehen aus diesem Material, sodass zur Bestimmung einer Temperaturdifferenz zwischen den betreffenden Temperatursensoren der Seebeck-Effekt ausgenutzt werden kann. Bevorzugte Temperatursensoren enthalten oder bestehen aus Konstantan.

In einer bevorzugten Ausführungsform weist die Außenseite der Oberfläche des Sondenkörpers (die dem die Sonde umgebenden Raum zugewandte Seite) keine Temperatursensoren auf, sondern alle Temperatursensoren sind auf der Innenseite der Oberfläche des Sondenkörpers angeordnet. Vorzugsweise werden dabei die Zuführungen zu diesen Sonden (Signalleitungen, Thermodrähte) zusammen mit den Fluidleitungen im Inneren der Sonde geführt. Dies hat den Vorteil, dass die gesamte Außenoberfläche des Sondenkörpers zumindest im Messbereich als geregelter Temperaturbereich zur Verfügung steht.

Bei außen angeordneten und geführten Temperatursensoren ergeben sich insbesondere die Nachteile, dass sich auf der Sondenaußenseite Störungen ergeben, die wiederum z.B. Wärmeübergang und Belagsbildung beeinflussen können und somit zu Fehleinschätzungen führen könnten, vor allem in den Strahlungszügen von Verbrennungsanlagen, aber auch in thermisch hochbelasteten Heizflächen, die Anwendungstemperatur der Temperatursensoren auf der Außenseite der Sonde überschritten werden kann, und bereits geringe korrosive Prozesse (z.B. Verzunderung) die Temperatursensoren von der Werkstoffoberfläche lösen und damit unbrauchbar machen oder auf andere Weise den Wärmekontakt der Temperatursensoren negativ beeinflussen können.
Des Weiteren ist es in Bezug auf die Ermittlung der optimalen Mediumstemperatur von Wärmetauschermedien (z.B. Kesselrohre) die Regel, den gewählten und durch Regelung konstant gehaltenen Temperaturbereich auf die Kontaktfläche zum wärmeaufnehmenden Medium zu beziehen und nicht auf die rauchgasberührte Oberflächentemperatur des Werkstoffs. Dies trifft insbesondere dann zu, wenn es sich um einen komplexen Wandaufbau handelt. Aus Sicht eines Betreibers einer Anlage ist daher die optimale Mediumstemperatur die relevante Größe und nicht die Temperatur an der rauchgasberührten Werkstoffoberfläche, da sich die Mediumstemperatur zum einen mit Betriebsmessungen erfassen lässt und zum anderen durch Regeleingriffe beeinflussbar ist.

Bei der bevorzugten Ausführungsform ist zumindest ein Teil der Temperatursensoren so angeordnet, dass die jeweiligen Messpunkte in einer Ebene senkrecht zur Längserstreckung des Sondenkörpers liegen (radiale Anordnung). Dabei sind mindestens zwei Punkte, insbesondere mindestens vier Punkte im Abstand von 90°, oder auch sechs Punkte im Abstand von 60° angeordnet. Bei einer solchen radialen Anordnung zumindest eines Teils der Temperatursensoren ergeben sich zusätzliche Möglichkeiten der Anwendung. Es können damit Anströmungseffekte, wie z.B. Flankeneffekte bei Wärmeübergang durch Strömung und auch durch Strahlung, und Effekte auf der Abströmseite, wie z.B. der Einfluss von Rußbläsern, erfasst werden.

In einer bevorzugten Ausführungsform wird der Temperaturbereich des Messbereichs der Werkstoffsonde durch Steuerung der hindurchfließenden Fluidmenge pro Zeit und/oder der Fluidtemperatur so eingestellt, dass er dem Temperaturbereich entspricht, dem die zu untersuchende Anlagenkomponente während des Betriebs ausgesetzt ist. Letztgenannter Temperaturbereich ist bekannt oder kann einfach durch Messung der Temperatur der jeweiligen Komponente bei dem Betrieb der Anlage ermittelt werden. Die eine Seite des Messbereichs der Werkstoffsonde wird bevorzugt so eingestellt, dass sie der niedrigsten Temperatur entspricht, die die jeweilige Anlagenkomponente im Betrieb aufweisen kann, und die Temperatur der anderen Seite des Messbereichs der Werkstoffsonde wird bevorzugt so eingestellt, dass sie der höchsten Temperatur entspricht, die die jeweilige Anlagenkomponente im Betrieb aufweisen kann. Vorzugsweise wird dabei bei den vorgenannten Temperaturen eine Abweichung von maximal 30 %, insbesondere 10 %, erlaubt. Zwischen diesen beiden Positionen des Messbereichs wird der Verlauf der Temperatur über den restlichen Messbereich so eingestellt, dass sie sich stetig und differenzierbar ändert, also kontinuierlich von der niedrigsten Temperatur zur maximalen Temperatur über den Sondenkörper hinweg ansteigt.
Bevorzugt beträgt die minimale Temperaturdifferenz zwischen den beiden Enden des Messbereichs des Sondenkörpers 10 K, insbesondere 100 K.

Auf diese Weise erzeugt die Werkstoffsonde ein komplettes Abbild eines korrosionsbelasteten Bauteils, inklusive Belagsbildung und Wärmestrom.

Beginn und Ende der "Reisezeit" der Sonde sind frei wählbar und werden bevorzugt auf vorgegebene Brennstoffe bzw. Betriebssituationen abgestimmt.

In einer bevorzugten Ausführungsform besteht der Sondenkörper außerhalb des Messbereichs aus dem gleichen Material wie im Messbereich oder aus einem ausreichend korrosionsresistenten Material, um die vorgesehene Einsatzzeit der Sonde ermöglichen zu können.

Das erfindungsgemäße Verfahren zur Messung des Einflusses eines Gasstroms auf Komponenten einer Anlage basiert auf den folgenden Schritten:
a) Einbringung mindestens einer der Werkstoffsonden in einen Gastrom, insbesondere an eine Position benachbart zu derjenigen der zu untersuchenden Komponente der betreffenden Anlage,
b) Belassung der Werkstoffsonde in dem Gasstrom über ein festgelegtes Zeitintervall mit gleichzeitiger Messung und Regelung des Temperaturverlaufs zumindest über den Messbereich des Sondenkörpers mittels der Temperatursensoren der Sonde und der Regelung des Fluidstroms innerhalb der Sonde,
c) Entnahme der Sonde aus dem Gasstrom nach Ablauf der Messzeit.

Nach der Entnahme wird die Sonde bevorzugt zusammen mit den Belägen vor störenden Umgebungseinflüssen (z.B. Luftfeuchtigkeit) geschützt. Dies geschieht insbesondere durch Umhüllen der Sonde mit geeigneten Verpackungsstoffen.

Nach der Messung können im Labor die relevanten Temperaturzonen herausgeschnitten und in mehreren Schritten untersucht werden. Dabei können die chemisch-mineralogischen Eigenschaften, die Prozesse an der Korrosionsfront und die Korrosionsprodukte jeweils pro Temperatur untersucht werden und die Korrosionsphänomene und die Abzehrraten durch metallurgische Untersuchungen bestimmt werden. Die Auswahl der relevanten Temperaturzonen ist dabei für den Fachmann sehr einfach, da sie bestimmten Bereichen des Sondenkörpers entsprechen, die nach Kenntnis des Temperaturverlaufs über den Sondenkörper während der Messung eindeutig identifiziert werden können.
Auf diese Weise lässt sich unter anderem die optimale Temperatur für den untersuchten Werkstoff unter den gegebenen betrieblichen Randbedingungen in Bezug auf tolerable Abzehrraten ermitteln, insbesondere abhängig von der gewünschten Reisezeit.

Die Anwendung der Werkstoffsonden ist im gesamten Temperaturbereich eines Gasstroms, z.B. dem gesamten Abgasbereich von Verbrennungsanlagen, möglich. Dieser Temperaturbereich kann dabei bis ca. 1000 °C reichen, aber auch niedrige Temperaturen von kleiner als 100 °C umfassen.

In einer bevorzugten Ausführungsform, die eine mehrlagige bzw. mehrschichtige Abfolgen von Werkstoffen auf der Sondenoberfläche aufweist, (nachfolgend als "Wandaufbau" bezeichnet), sind die Temperatursensoren (z.B. aufgepunktete Thermodrähte) ausschließlich auf der Innenoberfläche des Sondenkörpers angeordnet. Dies hat den Vorteil, dass insbesondere Dampferzeuger realitätsnah durch eine solche Sonde realisiert werden können, da als innerste "Schicht" des Wandaufbaus bei Dampferzeugern immer ein "Kesselrohr", also ein gut wärmeleitender, metallischer Werkstoff gegeben ist. Dies ermöglicht eine gute, sichere Aufpunktung von Thermoelementen und die Nutzung des Seebeck-Effekts. Die Thermodrahte müssen dadurch nur eine einzige elektrisch leitende Ader aufweisen. Durch die Innenaufpunktung ist es auch ohne Belang, ob die oberste (äußerste) Werkstoffschicht des Wandaufbaus metallisch ist. Somit können auch keramische (oder andere, nichtleitende) Werkstoffe als oberste Schicht von Wandaufbauten mittels der Werkstoffsonde getestet werden.
Der sich auf der Oberfläche des obersten Werkstoffs (also die Kontaktfläche zum Gasstrom bzw. zum Belag) einstellende Temperaturbereich lässt sich aus dem geregelten Temperaturbereich des innersten Werkstoffs (z.B. dem Kesselstahl) und der aufgeprägten Wärmestromdichte durch FEM-Modellierung ermitteln. Auch bei komplexen, mehrlagigen bzw. mehrschichtigen Abfolgen von Werkstoffen (z.B. Kesselrohr-Auftragsschweißung oder Kesselrohr-Auftragsschweißung-Luftspalt-Feuerfest) lassen sich somit bei bekannten Wärmeleitwiderständen der beteiligten Werkstoffe und Medien und deren geometrischen Bezügen die Oberflächentemperaturen durch Modellrechnung ermitteln.

Die für diese Vorgehensweise der Ermittlung des Temperaturbereichs der obersten Werkstoffoberfläche benötigte Wärmestromdichte lässt sich über die Messung der Fluidmenge und der Fluideinström- und -ausströmtemperatur ermitteln.

Die Werkstoffsonde kann auf diese Weise auch als Sonde zur Ermittlung der maximal geeigneten Wärmestromdichte in Abhängigkeit von der Mediumstemperatur verwendet werden.

In einer bevorzugten Ausführungsform besteht der größte Teil der Temperatursensoren aus Thermodrähten, die dermaßen auf eine metallische Komponente des Sondenkörpers aufgebracht sind, dass sie, ggf. paar- oder gruppenweise, den Seebeck-Effekt zur Ermittlung von Temperaturdifferenzen zwischen zwei Messpositionen des Sondenkörpers ausnutzen können. Dies hat unter anderem den Vorteil, dass ein besonders kleiner Durchmesser der Sonde erreicht werden kann. Dies wird durch die einadrige Zuführung erreicht. Bei einer bevorzugten Ausführung von innen aufgeschweißten Thermodrähten kann eine Zuführung zu den Messpunkten komplett im Inneren des Sondenkörpers bei besagten kleinen Abmessungen erreicht werden.
In einer weiteren bevorzugten Ausführungsform wird für eine Position der Thermoelemente ein zweiadriger Thermodraht verwendet, und an allen anderen Positionen wird jeweils nur ein Draht verwendet. Damit lässt sich der durch Drähte besetzte Volumenanteil innerhalb der Sonde im Vergleich zur Nutzung anderer Temperatursensoren nahezu halbieren und so auch die Dimension des Sondenkörpers minimieren. Dies ist bei vorgegebenen Öffnungen einer Verbrennungsanlage vielfach von Vorteil. Der Temperaturverlauf ergibt sich aus der einen Temperaturmessung (zweiadriger Thermodraht) und Differenztemperaturmessungen mit einem Draht und dem Sondenkörper als metallischem Leiter.
Die Verwendung von nur einem Draht pro Messposition kann auch bei größerer Sondengeometrie, z.B. wenn die Öffnungen der Verbrennungsanlage dies zulassen, dafür genutzt werden, dass die Anzahl der Messpositionen erhöht wird. Je enger die Abfolge von Messpositionen gewählt wird, desto exakter ist die Bestimmung des Temperaturverlaufs entlang der Sonde. Weitere Anwendungen dieser Sonde ergeben sich im Temperaturbereich der wässrigen elektrolytischen Korrosion (sog. Taupunktskorrosion), also deutlich unterhalb der üblichen Temperaturen von Sattdampf und Frischdampf (< 200 °C). Die Sonde zeigt auf, wie der Werkstoff in Abhängigkeit von der Temperatur durch Korrosion belastet wird. In diesem Fall entspricht die optimale Mediumstemperatur derjenigen Temperatur, die den gewünschten Abstand zu der Temperatur einhält, an der die Taupunktkorrosion beginnt. Abweichend von den oben genannten Einsatzbereichen im heißeren Gasmilieu, kann hier auch ein Werkstoff bzw. eine Sondenoberfläche aus organischem Material (z.B. Kunststoff, Gummi) zur Anwendung kommen. Auch hier ist die ausschließliche Innenaufpunktung der Thermodrähte von Vorteil, aus den gleichen Gründen wie oben beschrieben (keine störenden Effekte auf der Sondenoberfläche, keine korrosive Belastung der Aufpunktung, keine metallische Sondenoberfläche notwendig).

Zudem ergibt sich auch die vorteilhafte Möglichkeit, deutlich oberhalb der üblichen Temperaturen von Sattdampf und Frischdampf das Korrosionsverhalten von Werkstoffen (genauer: von Werkstoffoberflächen gegebener bzw. gewählter Wandaufbauten) zu untersuchen. Aus thermodynamischer Argumentation heraus ist es durchaus möglich, dass oberhalb bestimmter Werkstoffoberflächentemperaturen die korrosiv wirkenden chemischen Milieus im Belag nicht mehr wirken. Diese spezifischen Temperaturbereiche werden bisher in der Literatur und in der Praxis nicht näher betrachtet. Durch die hier beschriebene Sonde lässt sich dieser Temperaturbereich auf einfache Weise mit erschließen und mögliche Potentiale für eine optimierte Verfahrenstechnik erkennen.

Auch Brennstoff-Tests sind mit diesen Sonden möglich. Dazu werden mindestens zwei gleich aufgebaute Sonden bei jeweils unterschiedlichen Brennstoffen eingesetzt, sodass pro Sonde nur jeweils ein Brennstoff zum Einsatz kommt.

Eine weitere vorteilhafte Ausgestaltung der.Sonde sieht vor, auch die instationären Zustände der Verbrennungsanlage, also z.B. Anfahr- und Abfahrvorgänge, in ihrer Wirkung auf die Korrosion der Werkstoffe zu erfassen. Zu diesem Zweck wird ein frei wählbarer Teil des Sondenmantels, (jedoch vorzugsweise nicht an der Sondenspitze, da strömungstechnisch ein Sonderfall), so temperaturgeregelt, dass sich der gleiche Temperaturgradient ergibt, wie er für die relevanten Bauteile zutrifft. Zu diesem Zweck werden Temperatursensoren, insbesondere Thermoelemente, an die realen Bauteile aufgebracht und die damit gewonnenen Temperaturinformationen zur Regelung des gewählten Teils der Sonde eingesetzt. Auf diese Weise heizen oder kühlen die Fluide die Sonde entsprechend. Bei dieser Anwendung kann es von Vorteil sein, die Temperatursensoren auf der Außenoberfläche der Sonde anzuordnen, da auch die Vergleichs- und Regeltemperatur am Bauteil so gemessen wird. Allerdings lässt die begrenzte Lebensdauer von außen aufgebrachten Temperatursensoren den Weg über die Innenaufbringung und Umrechnung auf die Außenseite (durch Modellierung) als oftmals vorteilhafter erscheinen.

Beispiele für erfindungsgemäße Vorrichtungen sind in den Abbildungen dargestellt.
Figur 1 zeigt eine bevorzugte Ausführungsform einer Werkstoffsonde.
Figur 2 zeigt eine weitere bevorzugte Ausführungsform einer Werkstoffsonde.
Figur 3 zeigt eine weitere bevorzugte Ausführungsform einer Werkstoffsonde.

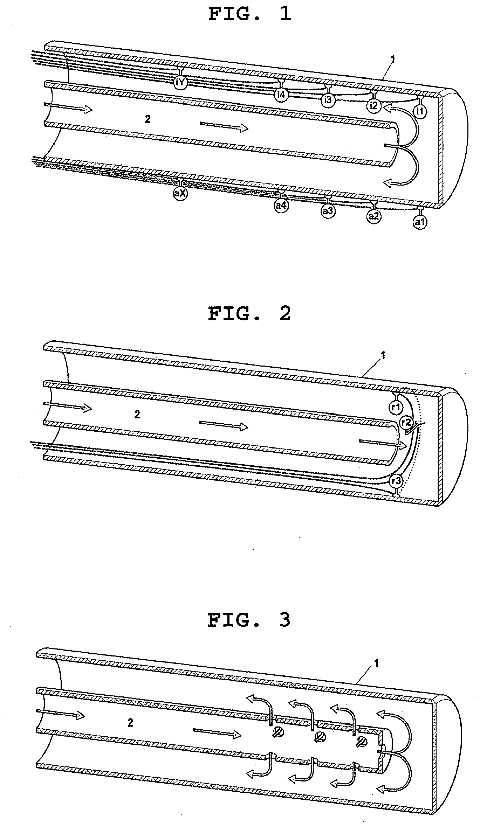

In Figur 1 ist eine bevorzugte Ausführungsform einer Werkstoffsonde dargestellt, deren Sondenkörper 1 durch ein Rohr gebildet wird. In diesem Rohr verläuft eine Fluidleitung 2, die ein Kühl- oder Heizmittel führen kann, dessen Verlauf mit den Pfeilen dargestellt ist.
Im oberen Teil der Werkstoffsonde sind fünf Temperatursensoren (i1 - i4 und iY) dargestellt, die an der Oberfläche des Sondenkörpers auf dessen Innenseite angebracht sind. Gut zu erkennen sind die Zuführungen zu diesen Temperatursensoren, die parallel an der Innenseite des Sondenkörpers geführt werden.
Im unteren Teil der Werkstoffsonde sind fünf Temperatursensoren (a1 - a4 und aX) dargestellt, die an der Oberfläche des Sondenkörpers auf dessen Außenseite angebracht sind. Gut zu erkennen sind die Zuführungen zu diesen Temperatursensoren, die parallel an der Außenseite des Sondenkörpers geführt werden.
In diesem Beispiel handelt es sich bei den Temperatursensoren um Thermodrähte, die an dem metallischen Rohr festgeschweißt sind und bevorzugt aus Konstantan bestehen. Auf diese Weise können Temperaturdifferenzen durch Ausnutzung des Seebeck-Effektes gut gemessen werden. Der Sondenkörper kann außen eine hier nicht dargestellte Beschichtung mit einem Werkstoff aufweisen, für den Fall, dass der Werkstoff des Sondenkörpers nicht dem zu untersuchenden Material entspricht.

In Figur 2 ist basierend auf der Ausführungsform gemäß

Figur 1 eine weitere bevorzugte Ausführungsform dargestellt, die eine radiale Anordnung von Temperatursensoren (r1 - r3) zeigt. Diese Anordnung kann zusätzlich zu der Anordnung der Temperatursensoren nach Figur 1 verwendet werden. Bei der bevorzugten Ausführungsform, umfassend eine radiale Anordnung zumindest eines Teils der Temperatursensoren, ergeben sich zusätzliche Möglichkeiten der Anwendung. Es können damit Anströmungseffekte, wie z.B. Flankeneffekte bei Wärmeübergang durch Strömung und auch durch Strahlung, und Effekte auf der Abströmseite, wie z.B. der Einfluss von Rußbläsern, erfasst werden.

Figur 3 zeigt eine alternative Zuführung von Heiz- oder Kühlfluiden durch eine innenliegende Fluidleitung 2. Bei einer bevorzugten Ausführungsform kann die Fluidleitung auf ihrer Mantelfläche, insbesondere steuerbare, Öffnungen aufweisen, durch die Fluid austreten kann. Dies hat den Vorteil, dass die Temperatur des Messbereichs der Sonde an bestimmten Stellen gezielt beeinflusst werden kann.

## Patentansprüche

1. Vorrichtung zur Messung der Veränderung von Werkstoffen durch Gasströme (Werkstoffsonde) umfassend einen Sondenkörper (1), wobei der Sondenkörper (1) einen Bereich aufweist, der zur Messung dient (Messbereich), und in seinem Messbereich mindestens einen langgestreckten Hohlkörper aufweist, und sich mindestens ein Flächenbereich des zu untersuchenden Werkstoffs auf der Außenseite der Sonde zumindest im Messbereich befindet, **dadurch gekennzeichnet,**
**dass** im Innern des Sondenkörpers (1) mindestens eine Fluidleitung (2) verläuft, mittels der die Sonde durch ein Fluid gekühlt oder beheizt werden kann, und dass die Werkstoffsonde mindestens zwei Temperatursensoren (i1 - iY, a1 - aX, r1 - r3) umfasst, welche zur Messung und Regelung zumindest der geringsten und höchsten Temperatur des Messbereichs der Werkstoffsonde und der Temperaturverteilung über den Messbereich dienen und auf der Innenseite der Oberfläche des Sondenkörpers (1) angebracht sind.

2. Vorrichtung nach Anspruch 1, **dadurch gekennzeichnet, dass** die Hohlkörper Rohre sind und insbesondere runde oder mehreckige Querschnitte aufweisen, oder der Querschnitt so gestaltet ist, dass er dem zu untersuchenden Werkstück entspricht, wobei die Hohlkörper vorzugsweise aus Metall bestehen oder Metall enthalten, insbesondere Eisen oder auf Eisen basierende Metalllegierungen.

3. Vorrichtung nach einem der vorangehenden Ansprüche, **dadurch gekennzeichnet, dass** mindestens ein Flächenbereich des zu untersuchenden Werkstoffs oder Flächenbereiche mehrerer zu untersuchender Werkstoffe auf der Sondenoberfläche oder zumindest der Oberfläche mindestens eines der Hohlkörper aufgebracht ist, oder durch die Sondenoberfläche oder die Oberfläche des betreffenden Hohlkörpers gebildet wird.

4. Vorrichtung nach einem der vorangehenden Ansprüche, **dadurch gekennzeichnet, dass** die Fluidleitungen (2) so konstruiert sind, dass die Strömung des Fluids auf dem Sondenkörper (1), zumindest im Messbereich, einen Temperaturgradienten einstellt, der durch eine Regelung der Fluidmenge und der Fluidtemperatur vorgegeben und konstant gehalten wird.

5. Vorrichtung nach einem der vorangehenden Ansprüche, **dadurch gekennzeichnet, dass** sich zwischen Gasstrom und Temperatursensoren (i1 - iY, a1 - aX, r1 - r3) mindestens der Flächenbereich des Werkstoffs und/oder die Wandung mindestens eines der Hohlkörper befindet, und dass vorzugsweise mindestens zwei der Temperatursensoren (i1 - iY, a1 - aX, r1 - r3) punktgeschweißte Thermoelemente sind, die, insbesondere zur Ausnutzung des Seebeck-Effektes, mit einer metallischen Oberfläche des Sondenkörpers (1) oder eines seiner Hohlkörper verbunden sind.

6. Vorrichtung nach einem der vorangehenden Ansprüche, **dadurch gekennzeichnet, dass** die Außenseite der Oberfläche des Sondenkörpers (1) keine Temperatursensoren (i1 - iY, a1 - aX, r1 - r3) aufweist, sondern alle Temperatursensoren (i1 - iY, a1 - aX, r1 - r3) auf der Innenseite der Oberfläche des Sondenkörpers (1) angeordnet sind und die Zuführungen zu diesen Sonden bevorzugt zusammen mit den Fluidleitungen (2) im Inneren der Sonde geführt werden.

7. Vorrichtung nach einem der vorangehenden Ansprüche, **dadurch gekennzeichnet, dass** zumindest ein Teil der Temperatursensoren (i1 - iY, a1 - aX, r1 - r3) so angeordnet ist, dass die jeweiligen Messpunkte in einer Ebene senkrecht zur Längserstreckung des Sondenkörpers (1) liegen (radiale Anordnung), wobei mindestens zwei Punkte, insbesondere mindestens vier Punkte im Abstand von 90°, oder auch sechs Punkte im Abstand von 60° angeordnet sind.

8. Vorrichtung nach einem der vorangehenden Ansprüche, **dadurch gekennzeichnet, dass** mehr als 50 % der Temperatursensoren (i1 - iY, a1 - aX, r1 - r3) aus Thermodrähten gebildet wird, die dermaßen auf eine metallische Komponente des Sondenkörpers (1) aufgebracht sind, dass sie, insbesondere paar- oder gruppenweise, den Seebeck-Effekt zur Ermittlung von Temperaturdifferenzen zwischen zwei Messpositionen des Sondenkörpers (1) ausnutzen können, wobei vorzugsweise für eine Position der Temperatursensoren (i1 - iY, a1 - aX, r1 - r3) ein zweiadriger Thermodraht verwendet wird und an allen anderen Positionen jeweils nur ein Draht verwendet wird.

9. Verfahren zur Messung des Einflusses eines Gasstroms auf Komponenten einer Anlage, **gekennzeichnet durch** die folgenden Schritte:
a) Einbringung mindestens einer Vorrichtung nach einem der vorangehenden Ansprüche in einen Gastrom,
b) Belassung der Werkstoffsonde in dem Gasstrom über ein festgelegtes Zeitintervall mit gleichzeitiger Messung und Regelung des Temperaturverlaufs zumindest über den Messbereich des Sondenkörpers (1) mittels der Temperatursensoren (i1 - iY, a1 - aX, r1 - r3) der Sonde und der Regelung des Fluidstromes innerhalb der Sonde,
c) Entnahme der Sonde aus dem Gasstrom nach Ablauf der Messzeit.

10. Verfahren nach Anspruch 9, **dadurch gekennzeichnet, dass** die Temperatur dermaßen geregelt wird, dass die Temperatur der einen Seite des Messbereichs der Werkstoffsonde so eingestellt wird, dass sie der niedrigsten Temperatur entspricht, die die jeweilige Anlagenkomponente aufweisen kann, und die Temperatur der anderen Seite des Messbereichs der Werkstoffsonde so eingestellt wird, dass sie der höchsten Temperatur entspricht, die die jeweilige Anlagenkomponente aufweisen kann, wobei vorzugsweise bei den vorgenannten Temperaturen eine Abweichung von maximal 30%, insbesondere 10%, erlaubt wird, und zwischen diesen beiden Positionen des Messbereichs der Verlauf der Temperatur über den restlichen Messbereich so eingestellt wird, dass er sich stetig und differenzierbar ändert, also kontinuierlich von der niedrigsten Temperatur zur maximalen Temperatur über den Sondenkörper (1) hinweg ansteigt.

## Claims

1. A device for measuring changes in materials caused by gas streams (material probe), comprising a probe body (1), wherein said probe body (1) has a region used for measuring (measuring region) and has at least one elongated hollow body in said measuring region, and wherein at least one surface region of the material to be examined is located on the outer face of said probe and at least in said measuring region, **characterized in that**
at least one fluid conduit (2) extends in the interior of the probe body (1), by means of which conduit the probe can be cooled or heated by a fluid, and that the material probe comprises at least two temperature sensors (i1-iy, a1-aX, rl-r3) which are used for measuring and closed-loop controlling at least the lowest and the highest temperature of the measuring region of the material probe and the temperature distribution over said measuring region, and which are mounted on the inner face of the surface of the probe body (1).

2. The device according to claim 1, **characterized in that** said hollow bodies are tubes and have, in particular, round or polygonal cross-sections, or that the cross-section is designed so that it corresponds to the workpiece to be examined, wherein the hollow bodies are preferably made of metal or contain metal, in particular, iron, or iron-based metal alloys.

3. The device according to any one of the preceding claims, **characterized in that** at least one surface region of the material to be examined, or surface regions of a plurality of materials to be examined, is applied to the probe surface or at least to the surface of at least one of the hollow bodies, or is formed by the probe surface or the surface of the respective hollow body.

4. The device according to any one of the preceding claims, **characterized in that** said fluid conduits (2) are designed such that the flow of the fluid on the probe body (1), at least in the measuring region, establishes a temperature gradient which is predefined and maintained constant by closed-loop controlling of the amount of the fluid and the fluid temperature.

5. The device according to any one of the preceding claims, **characterized in that** between the gas flow and the temperature sensors (i1-iy, a1-aX, r1-r3) there is at least the surface region of the workpiece and/or the wall of at least one of the hollow bodies, and **in that** preferably at least two of the temperature sensors (il-iy, a1-aX, rl-r3) are spot-welded thermocouples which, in particular in order to exploit the Seebeck effect, are connected with a metallic surface of the probe body (1) or of one of its hollow bodies.

6. The device according to any one of the preceding claims, **characterized in that** the outer face of the surface of the probe body (1) has no temperature sensors (il-iy, a1-aX, rl-r3), but all temperature sensors (i1-iy, a1-aX, rl-r3) are arranged on the inner face of the surface of the probe body (1), and the leads to these probes are preferably conducted jointly with the fluid conduits (2) in the interior of the probe.

7. The device according to any one of the preceding claims, **characterized in that** at least a part of the temperature sensors (il-iy, a1-aX, r1-r3) is arranged so that the respective measurement points are located in a plane perpendicular to the longitudinal extension of the probe body (1) (radial arrangement), with at least two points, in particular at least four points at intervals of 90°, or six points at intervals of 60°, being arranged.

8. The device according to one of the preceding claims, **characterized in that** more than 50% of the temperature sensors (il-iy, a1-ax, r1-r3) is formed from thermocouple wires which are applied to a metallic component of the probe body (1) such that they are able to exploit, in particular in pairs or in groups, the Seebeck effect to determine the temperature differences between two measurement positions of the probe body (1), wherein, preferably, at one position of the temperature sensors (il-iy, a1-aX, r1-r3) a two-core thermocouple wire is used and at all other positions one respective wire is used only.

9. A method for measuring the influence of a gas stream on components of a plant, **characterized by** the following steps :
a) introducing at least one device according to any one of the preceding claims in a gas stream;
b) leaving the material probe in the gas stream for a fixed time interval, with simultaneous measurement and closed-loop control of the temperature profile at least over the measuring region of the probe body (1) by means of the temperature sensors (il-iy, a1-aX, r1-r3) of the probe and by means of the closed-loop control of the fluid flow within the probe;
c) removing the probe from the gas stream after the measurement time.

10. The method according to claim 9, **characterized in that** the temperature is closed-loop controlled such that the temperature of one side of the measuring region of the material probe is adjusted so that it corresponds to the lowest temperature which may occur in the respective plant component, and the temperature of the other side of the measuring region of the material probe is adjusted so that it corresponds to the highest temperature that may occur in the respective plant component, wherein, preferably in the case of the aforementioned temperatures, a deviation of at most 30%, particularly 10%, is allowed and, between these two positions of the measuring region, the temperature profile over the remaining measuring region is set such that it changes continuously and differentiably, i.e. increases continuously over the probe body (1), from the lowest temperature to the maximum temperature.

## Revendications

1. Dispositif pour la mesure de la modification de matières par des flux gazeux (sonde de matière) comportant un corps de sonde (1), dans lequel le corps de sonde (1) comprend une zone qui sert à la mesure (zone de mesure) et comprend dans sa zone de mesure au moins un corps creux allongé, et au moins une zone de surface de la matière à examiner se trouve sur la face externe de la sonde au moins dans la zone de mesure, **caractérisé en ce qu'**au moins une conduite de fluide (2) s'étend à l'intérieur du corps de sonde (1), au moyen de laquelle la sonde peut être refroidie ou chauffée par un fluide, et **en ce que** la sonde de matière comporte au moins deux capteurs de température (i1 à iY, a1 à aX, r1 à r3), lesquels servent à la mesure et à la régulation d'au moins la température la plus basse et la température la plus élevée de la zone de mesure de la sonde de matière et de la distribution de température sur la zone de mesure et sont montés sur la face interne de la surface du corps de sonde (1).

2. Dispositif selon la revendication 1, **caractérisé en ce que** les corps creux sont des tuyaux et possèdent en particulier des sections transversales rondes ou polygonales, ou la section transversale est conçue de telle sorte qu'elle corresponde à la pièce à examiner, dans lequel les corps creux sont de préférence constitués de métal ou contiennent du métal, en particulier du fer ou des alliages métalliques à base de fer.

3. Dispositif selon l'une des revendications précédentes, **caractérisé en ce qu'**au moins une zone de surface de la matière à examiner ou des zones de surface de plusieurs matières à examiner sont montées sur la surface de sonde ou au moins la surface d'au moins l'un des corps creux, ou sont formées par la surface de sonde ou la surface du corps creux concerné.

4. Dispositif selon l'une des revendications précédentes, **caractérisé en ce que** les conduites de fluide (2) sont construites de telle sorte que l'écoulement du fluide sur le corps de sonde (1), au moins dans la zone de mesure, ajuste un gradient de température qui est prédéfini et maintenu constant par une régulation de la quantité de fluide et de la température de fluide.

5. Dispositif selon l'une des revendications précédentes, **caractérisé en ce qu'**au moins la zone de surface de la matière et/ou la paroi d'au moins l'un des corps creux se trouvent entre le flux gazeux et les capteurs de température (i1 à iY, a1 à aX, r1 à r3), et **en ce que** de préférence au moins deux des capteurs de température (i1 à iY, a1 à aX, r1 à r3) sont des éléments thermiques soudés par points qui sont, en particulier pour l'utilisation de l'effet Seebeck, reliés à une surface métallique du corps de sonde (1) ou de l'un de ses corps creux.

6. Dispositif selon l'une des revendications précédentes, **caractérisé en ce que** la face externe de la surface du corps de sonde (1) ne comprend aucun capteur de température (i1 à iY, a1 à aX, r1 à r3), mais tous les capteurs de température (i1 à iY, a1 à aX, r1 à r3) sont disposés sur la face interne de la surface du corps de sonde (1) et les amenées vers ces sondes sont guidées de préférence conjointement avec les conduites de fluide (2) à l'intérieur de la sonde.

7. Dispositif selon l'une des revendications précédentes, **caractérisé en ce qu'**au moins une partie des capteurs de température (i1 à iY, a1 à aX, r1 à r3) sont disposés de telle sorte que les points de mesure respectifs se situent dans un plan perpendiculaire à l'étendue longitudinale du corps de sonde (1) (disposition radiale), dans lequel sont disposés au moins deux points, en particulier au moins quatre points distants de 90°, ou encore six points distants de 60°.

8. Dispositif selon l'une des revendications précédentes, **caractérisé en ce que** plus de 50 % des capteurs de température (i1 à iY, a1 à aX, r1 à r3) sont formés à partir de fils thermoélectriques qui sont montés sur un composant métallique du corps de sonde (1) de telle sorte qu'ils puissent, en particulier par paire ou par groupe, utiliser l'effet Seebeck pour la détermination de différences de température entre deux positions de mesure du corps de sonde (1), dans lequel un fil thermoélectrique à deux conducteurs est utilisé de préférence pour une position des capteurs de température (i1 à iY, a1 à aX, r1 à r3) et un seul fil électrique est utilisé en chacune de toutes les autres positions.

9. Procédé pour la mesure de l'influence d'un flux gazeux sur des composants d'une installation, **caractérisé par** les étapes suivantes :
a) introduction d'au moins un dispositif selon l'une des revendications précédentes dans un flux gazeux,
b) maintien de la sonde de matière dans le flux gazeux sur un intervalle de temps fixé avec la mesure et la régulation simultanées de la variation de température au moins sur la zone de mesure du corps de sonde (1) au moyen des capteurs de température (i1 à iY, a1 à aX, r1 à r3) de la sonde et de la régulation du flux de fluide au sein de la sonde,
c) retrait de la sonde du flux gazeux après écoulement du temps de mesure.

10. Procédé selon la revendication 9, **caractérisé en ce que** la température est régulée de telle sorte que la température d'une face de la zone de mesure de la sonde de matière soit ajustée de telle sorte qu'elle corresponde à la température la plus faible que le composant d'installation respectif puisse présenter, et que la température de l'autre face de la zone de mesure de la sonde de matière soit ajustée de telle sorte qu'elle corresponde à la température la plus élevée que le composant d'installation respectif puisse présenter, dans lequel de préférence aux températures précitées un écart maximal de 30 %, en particulier de 10 %, est autorisé, et entre ces deux positions de la zone de mesure la variation de la température sur la zone de mesure résiduelle est ajustée de telle sorte qu'elle se modifie de manière constante et différenciable, et augmente également en continu de la température la plus faible à la température maximale sur le corps de sonde (1).
